(19)

**Europäisches Patentamt**

**European Patent Office**

**Office européen des brevets**

(11) **EP 3 824 256 B1**

(12) **EUROPEAN PATENT SPECIFICATION**

(45) Date of publication and mention of the grant of the patent:
**01.06.2022 Bulletin 2022/22**

(21) Application number: **19746426.6**

(22) Date of filing: **22.07.2019**

(51) International Patent Classification (IPC):
**G01F 23/00** *(2022.01)*    **G01F 1/44** *(2006.01)*
**G01F 23/14** *(2006.01)*

(52) Cooperative Patent Classification (CPC):
**G01F 23/14; G01F 23/804;** G01F 1/44

(86) International application number:
**PCT/EP2019/069705**

(87) International publication number:
**WO 2020/016458 (23.01.2020 Gazette 2020/04)**

(54) **LIQUID MEASUREMENT DEVICE FOR A TANK**

FLÜSSIGKEITSMESSGERÄT FÜR EINEN TANK

DISPOSITIF DE MESURE DE LIQUIDE POUR UN RÉSERVOIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2018 GB 201811918**

(43) Date of publication of application:
**26.05.2021 Bulletin 2021/21**

(73) Proprietor: **Gillespie Avionics Limited**
**Letterkenny, Donegal (IE)**

(72) Inventor: **GILLESPIE, Alan**
**Kilmacrennan, Donegal (IE)**

(74) Representative: **Schütte, Gearoid**
**Cruickshank**
**8a Sandyford Business Centre**
**Sandyford**
**Dublin D18 R2N8 (IE)**

(56) References cited:
**WO-A1-2012/102735      WO-A1-2018/083453**
**GB-A- 276 373      GB-A- 2 252 405**
**GB-A- 2 527 269      US-A- 5 138 559**
**US-A1- 2015 035 093      US-A1- 2017 131 132**

## Description

### Field of the Invention

The present invention pertains to the measurement of a liquid contained within a tank that may be subject to movement, and therefore acceleration, such as a fuel tank on an aircraft or boat.

### Description of the Related Art

Measurement of fuel remaining in an aircraft tank is of critical importance to flight safety as pilots require this information to ensure that the aircraft is not flown beyond the limits of endurance or to assess any abnormal conditions such as fuel leakage or fuel stoppage.

With regards to General Aviation (GA), the majority of aircraft are fitted with fuel-level sensors that typically consist of a sensor that measures the movement of a float within the fuel tank at one or more locations. These sensors generally comprise of a wire-wound or metal-film potentiometer, however a non-contact version based on magneto-resistance is becoming popular on new aircraft as they provide increased resolution of float position.

The majority of the GA fleet utilise a single sensor in each fuel tank, located close to the lowest point in the fuel tank, typically the inboard end on wing-mounted fuel tanks. This configuration is limiting as it does not permit the entire contents of the fuel tank to be measured due to the inherent wing dihedral required for lateral flight stability. In addition, the physical height of the float limits the available travel of the float as it moves, thus reducing the height of liquid that it can sense. A minority of mostly new aircraft are fitted with two fuel sensors in each fuel tank, one at each end to measure the entire fuel capacity, however this solution imposes increased complexity and costs, particularly in retrofit installations.

Capacitive fuel-level sensors are often installed in higher value GA aircraft and are based on a probe consisting of two concentric tubes. This approach is based on the principle that capacitance, measured between the concentric tubes, increases as the fuel level between the concentric tubes increases. An accurate measurement of the resulting small capacitance change is challenging, leading to expensive electronics and installation costs. Single probes have similar drawbacks to float-based sensors as they measure fuel depth at specific locations within the fuel tank and multiple probes per tank are required for accurate measurements over the entire fuel tank capacity range. In addition, capacitive probes are susceptible to fuel contamination, such as water or fungus, as this introduces errors in the capacitance measurement. Capacitive probes may require regular maintenance to remove any deposits or contamination which degrades their accuracy. Importantly, these probes are in electrical contact with fuel which introduces an explosion risk and makes certification costly.

The present invention is directed towards overcoming these problems.

### Listing of Related Art

A number of liquid measurement systems are disclosed in the following documents:

US 6,513,376 B Liquid Level Height Measurement System
US 6,577,960 B1 Liquid Gauging Apparatus Using a Time Delay Neural Network
CN 202,522,286 U Differential Pressure Liquid Level Measurement Device for Container
GB 2,527,269 A1 A Method and Apparatus for Monitoring the Volume of Oil in an Oil Storage Tank
EP 3,392,625 A1 Integrated Sensor Unit for Fuel Sensing
US 7,251,998 B2 Liquid Measurement System Having a Plurality of Differential Pressure Probes (also WO 2006/127540 A2 and US 2006/0266111 A1)
US 6,282,953 B1 Solid State Fuel Sensing Device
US 6,157,894 A Liquid Gauging Using Sensor Fusion and Data Fusion
US 5,386,736 A Fuel Tank With Integral Fuel Quantity Gauging
US 5,138,559 A System and Method for Measuring Liquid Mass Quantity
US 4,739,494 A Apparatus for Measuring the Weight of Fuel Remaining in a Fuel Tank on a Flying Object
US 4,553,216 A Liquid Storage Gauging Method and Apparatus
US 5,207,099 A Liquid Quantity Gauging (also FR 2,672,389 A1)
US 6,157,894 A Liquid Gauging Using Sensor Fusion and Data Fusion
FR 2,596,150 A1 Device for measuring the quantity of fluid contained in a tank
GB 276 373 A Means for indicating the level of the liquid in tanks, more particularly tanks of motor vehicles **Summary of the Invention**

The quantity of liquid in a tank that is subject to accelerations, such as those experienced by aircraft, boats or motor vehicles, is determined by calculating the pressure head at a known reference point, typically located on an inner tank surface, and relating pressure head to liquid quantity. Pressure head is determined by computing the weight of liquid above this reference point, derived from pressure and acceleration measurements.

Static pressure, measured at a convenient location in a liquid outlet pipe, external to the tank, is used to indirectly compute the static pressure at the reference point within the tank. Sensing liquid pressure outside of the tank promotes a simpler and more flexible solution, enabling a greater number of retrofit installations. In addition, routine maintenance is easier due to better accessibility. This is a radical departure from conventional gauging systems where liquid sensing elements are mounted on or within the tank.

A means of relating the static pressure in the tank outlet pipe to the pressure experienced at the reference point is required. Furthermore, when liquid is flowing, variations in static pressure due to energy losses in a pickup pipe (located within the tank) and the associated tank outlet pipe must be taken into account. This requires accurate measurement of volume flow-rate.

A secondary feature of the sensor is that the volume flow-rate may be determined with the inclusion of an additional static pressure sensor when the tank outlet pipe is configured to measure the pressure drop associated with a flow constriction device. Such a device may utilise a pitot tube, venturi tube, orifice plate, nozzle, drag plate, or other methods that are known to anyone skilled in the art. Although flow measurement can be achieved with other technologies, such as turbine, positive-displacement, ultrasonic, Coriolis, etc., the addition of at least one pressure sensor is a simple and elegant solution in the proposed embodiments.

A condition for static pressure measurement is that the tank outlet pipe must contain liquid, which is the case when the engine is running and, for example, when the engine is stopped but the fuel lines (between the tank and the engine) are primed using an electric pump. In most instances, fuel will be retained in the tank outlet pipe even during prolonged periods when the engine is not running. It will be appreciated that the present invention does not depend on the action of an engine or pump and, for example, will function when liquid flows under the influence of gravity.

Knowledge of the local acceleration vector is required to compensate for accelerations arising from gravity, aircraft manoeuvring or weather-related disturbances. These variations affect both the orientation of the liquid surface and the weight of the fuel within the tank which in turn affects the static pressure in the tank outlet pipe.

Nowadays, pressure sensors are typically based on MEMS technologies. Such sensors can be isolated from the liquid using various media-isolating techniques such as inert barrier fluids, flurosilicone coatings, silicon or stainless steel diaphragms. In addition, these sensors often incorporate amplifiers, analog-to-digital (A/D) conversion circuitry, temperature compensation and digital interfaces. The system that processes the digital sensor data may be located close to the sensors or in a central location. As no electronic components are located within the fuel tank or are in contact with fuel in the tank outlet pipe, the possibility of ignition of a highly flammable fuel, such as AVGAS, is eliminated.

Pressure sensors are less costly than capacitive sensors and provide vastly improved fuel quantity coverage than capacitive or float-based sensors. In addition, they are very accurate, being temperature compensated, and provide high resolution measurements of the fuel surface location and hence quantity. In addition, immunity from lightning and electromagnetic interference (EMI) is assured as the sensors are electrically isolated from the fuel which they sense.

Utilising multiple low-cost sensors within each pressure port enables redundancy and increased performance with minimal increase in complexity. Similar advantages are obtained with regard to inertial measurements, facilitated by the availability of low-cost MEMS-based accelerometers and gyroscopes.

In one embodiment of the invention there is provided a measurement device for determining the quantity of liquid in a tank, including a first pressure sensor for measuring a first pressure value for liquid in a liquid dispensing line for discharging liquid from the tank, a second pressure sensor for measuring a second pressure value in an ullage space above the liquid in the tank, and means for calculating the quantity of liquid in the tank in response to said measured pressure values.

In a preferred embodiment of the invention, there is provided a measurement device for determining the quantity of liquid in a tank, including:

a first pressure sensor to measure a first pressure value for liquid in the tank,
a second pressure sensor for measuring a second pressure value in an ullage space above the liquid in the tank,
an accelerometer,
means for calculating the quantity of liquid in the tank in response to the measured values from the pressure sensors and accelerometer,
characterised in that the first pressure sensor is for mounting on a liquid outlet pipe connected to the tank for discharging liquid from the tank, and the measurement device includes a flow measurement device to determine the rate of liquid flow through the liquid outlet pipe, and the means for calculating the quantity of liquid in the tank includes in response to the measured values from the flow measurement device.

In one embodiment of the invention the calculating means is operable to determine the pressure at a selected reference point associated with the tank based on the first pressure value.

In another embodiment of the invention the selected reference point is at a bottom of the tank.

In another embodiment of the invention the first and second pressure sensors comprise a differential pressure meter.

In another embodiment of the invention the device includes a flow measurement device to determine the rate of liquid flow through the device.

In another embodiment of the invention the device further includes a flow measurement device to determine the rate of liquid flow returning to the tank.

In another embodiment of the invention the flow measurement device is a differential pressure meter.

In another embodiment of the invention the differential pressure meter comprises a venturi flow meter.

In another embodiment of the invention the device comprises a body having a liquid passageway extending through the body between an inlet port and an outlet port, the first pressure sensor being mounted at the liquid passageway adjacent the inlet port.

In another embodiment of the invention the venturi flow meter is provided in the liquid passageway.

In another embodiment of the invention one or more 3-axis accelerometers are mounted on the body.

In another embodiment of the invention one or more 3-axis gyroscopes are mounted on the body.

In another embodiment of the invention the second pressure sensor is mounted at a vent pipe on the tank.

In another embodiment of the invention the second pressure sensor is mounted at a fuel cap on the tank.

In another embodiment of the invention at one or more pressure sensing locations a plurality of pressure sensors are provided. This allows for greater measurement accuracy to be achieved. Also, the device will continue to operate even if one of the pressure sensors at a given location fails.

In another embodiment of the invention a plurality of pressure sensors are mounted on the body to enable redundant measurements at each pressure port. Thus, the device will continue to operate notwithstanding failure of some pressure sensors in use. Also multiple pressure sensors can be used to improve measurement accuracy.

In another embodiment of the invention a plurality of pressure sensors are mounted on the body to measure static pressure at an inlet of the venturi and at a throat of the venturi.

In another embodiment of the invention a plurality of pressure sensors are mounted on a vent pipe, or cap of the tank to provide the second pressure value.

**Brief Description of the Drawings**

The invention will be more clearly understood from the following description of some embodiments thereof, given by way of example only, with reference to the accompanying drawings, in which:

FIG. 1 is an isometric schematic view of a simplified tank containing liquid having an external tank liquid content measurement device according to the invention;

FIG. 2 is an isometric view of the extended free-surface of the liquid showing the normal SP from the plane surface at P to the sensor S and the normal QR from the plane surface at Q to the reference point R;

FIG. 3 is the projection of the free-surface onto the plane $\{Z_P, X_P\}$, centred on the surface point P;

FIG. 4 is the projection of the free-surface onto the $\{Z_P, Y_P\}$ plane, centred on the surface point P;

FIG. 5 is the projection of the free-surface onto the $\{Z_Q, X_Q\}$ plane, centred on the surface point Q;

FIG. 6 is the projection of the free-surface onto the $\{Z_Q, Y_Q\}$ plane, centred on the surface point Q;

FIG. 7 depicts the normal from the free-surface at P to the first sensor S;

FIG. 8 depicts the normal from the free-surface at Q to the reference point R;

FIG. 9 depicts a schematic sectional elevational view of a rectangular tank, containing liquid which flows from the tank via an outlet pipe;

FIG. 10 depicts a schematic cross-sectional view of a measurement device according to the invention comprising pressure sensors, signal conditioning (amplifiers, analog-to-digital (A/D) converters), inertial measurement unit (IMU), wired/wireless communication interfaces and power-supply, the device being installed to monitor pressure head and volume flow-rate in a tank supply line;

FIG. 11 depicts a schematic cross-sectional view of a simplified measurement device comprising pressure sensors, signal conditioning (amplifiers, analog-to-digital (A/D) converters), wired interface and power supply, for installation in applications where liquid is returned to the tank with a requirement to monitor volume flow-rate in the tank return line;

FIG. 12 depicts a schematic isometric view of a measurement device according to the invention comprising pressure sensors, signal conditioning (amplifiers, analog-to-digital (A/D) converters), inertial measurement unit (IMU), wired/wireless communication interfaces and power-supply, including pressure sensors in a liquid return line to the tank, and means to measure air vent or tank ullage pressure; and

FIG. 13 depicts a schematic sectional elevational view of two inter-connected tanks with individual vent ports and their bases at different heights having the measurement device installed in a single outlet pipe; and

FIG. 14 is a schematic illustration of portion of another measurement device according to the invention for monitoring tank ullage pressure in a vent line or fuel tank cap.

## DETAILED DESCRIPTION OF THE PREFERRED EMBODIMENTS

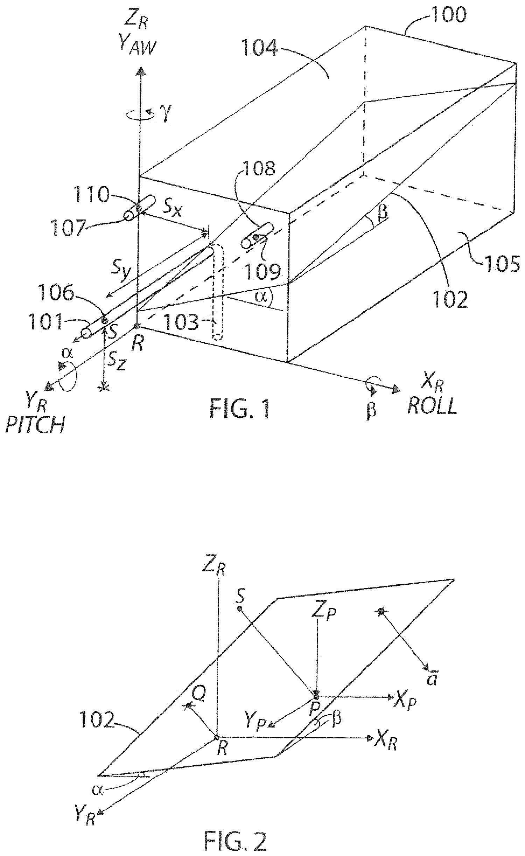

FIG. 1 depicts a simplistic tank 100 that may be used to store fuel 105 onboard a vehicle, such as an aircraft or boat, that is subject to movement and therefore acceleration. The tank 100 may have many different configurations in order to fit within the aircraft structure or other environment within which the tank 100 is located. For example, the tank 100 may have an irregular geometry that conforms to the airfoil and taper of the enclosing wing. In many light aircraft, the tank 100 is an integral part of the wing structure itself. Those skilled in the art will appreciate that the invention can be utilised within any liquid container, where liquid quantity and rate of flow are of particular interest. Furthermore, the invention is not limited to any particular liquid type, although for convenience herein we will refer to a fuel tank 100 installed in an aircraft.

A fuel tank outlet pipe 101 connects between the tank 100 and the aircraft engine (not shown). The outlet pipe 101 contains fuel, either in motion such as when the engine is consuming fuel, or at rest as may be the case when the engine is stopped. The outlet pipe 101 may exit the tank 100 at any location that is appropriate for the type of associated installed internal pickup pipe 103 connected to the outlet pipe 101 which is generally located at the lowest point within the tank 100 to extract as much fuel as possible. The pickup pipe 103 may be fixed or movable to ensure continuous fuel delivery on aircraft that perform aerobatic manoeuvres.

A first measurement device 106 of the present invention is located external to the tank 100 and is installed in the outlet pipe 101. A tank ullage region 104, or region within the tank 100 above a fuel surface 102, is vented via vent port 108 adjacent a top of the tank 100, or any other suitable port that allows air within the ullage region 104 to equalise with external air pressure. In general aviation, the vent port 108 is typically oriented into the airflow to provide a positive pressure to the ullage region 104 and promote fuel flow to the engine. An ullage pressure sensor 109 is connected to the vent pipe 108 and measures the pressure within the ullage region 104. Anyone skilled in the art will appreciate that the ullage pressure sensor 109 may be attached to a fuel cap or other accessible port on the tank 100 that is located at the highest point within the tank 100.

On some aircraft, an additional return fuel line 107 is installed to return unused or recycled fuel back to the tank 100. In this scenario, a simplified second measurement device 110 is inserted into the return fuel line 107 to measure volume flow-rate, ensuring that the total flow consumed is consistent with the quantity of fuel in the tank 100 at all times.

A reference point R, located internally or externally to the tank 100, is selected as the origin of the axes used to reference the pressure head measured by the measurement device 106 of the present invention. The reference point R is chosen to measure the pressure head at a convenient location, such as the projection of the centroid of the liquid volume onto the tank base, in order to minimise the variation in pressure head with surface orientation. Analysis of the relationship between tank fill level and the centroid of the liquid affords the opportunity to utilise a dynamic reference point, thereby minimising the effects of local acceleration on surface orientation at all fill levels. This optimisation is not possible in capacitive or float-based liquid measurement systems as the sensor locations are limited by design and accessibility constraints.

Any change in direction or velocity of an aircraft from level flight will produce a local acceleration that will change the orientation of the free surface 102 of the fuel 105 and therefore affect the pressure head measurement at R. The magnitude of the acceleration vector will also impact the pressure head measurement. Referencing FIG. 2, the free surface 102 of the fuel 105 is titled by a roll angle $\beta$ about the X-axis and a pitch angle $\alpha$ about the Y-axis due to the effects of the local acceleration vector $\bar{a}$.

To compute the quantity of liquid in the tank 100, it is necessary to determine the pressure head at the specified tank reference point R and then relate this to the volume of liquid V within the tank 100, given knowledge of the tank geometry and local acceleration vector $\overline{a}$.

As the measurement device 106 may be located some distance from the tank 100 it is measuring, it may be challenging to accurately determine the location of the measurement device 106 in relation to the reference point R of the tank 100. An "auto-locate" algorithm has been developed to compute the location of the measurement device 106 in relation to the reference point R.

**Operational Modes**

In normal operation the invention operates as a Fuel System Health Monitor (FSHM) that continuously monitors each tank 100 for abnormalities that affect flight safety by comparing fuel quantity values computed using different methods. One method integrates volume flow-rate (accounting for return flow, if implemented) over known time periods and subtracts the result from an initial starting quantity. The other method computes quantity by determining pressure head at a tank reference point R and then extracting quantity from a mathematical model of the tank 100. The key operational steps are detailed in Algorithm 3.

It is possible to configure the invention into a special mode that continuously computes the location of the first pressure sensor S relative to the tank reference point R. This is initiated when fuel flows above a specified threshold value. Sufficient data points ($\alpha$, $\beta$, RQ, $\phi$) are captured to ensure that the sensor location can be ascertained to the required accuracy during a short flight. The key operational steps are detailed in Algorithm 4.

**Venturi Flow-Meter**

Measurement of volume flow-rate using a Venturi is an elegant solution as it:

- provides the lowest non-recoverable pressure loss of any constriction-based flow-meter

- requires minimum additional hardware (an additional pressure sensor)

- promotes long-term reliability due to its inherent simplicity

- maintains unrestricted flow, due to lack of moving parts, easing certification whilst maintaining flight safety.

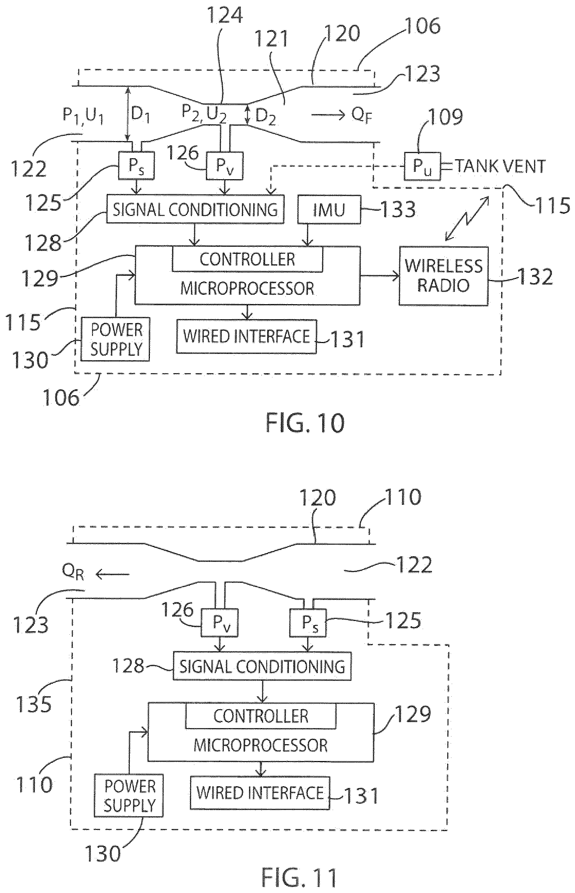

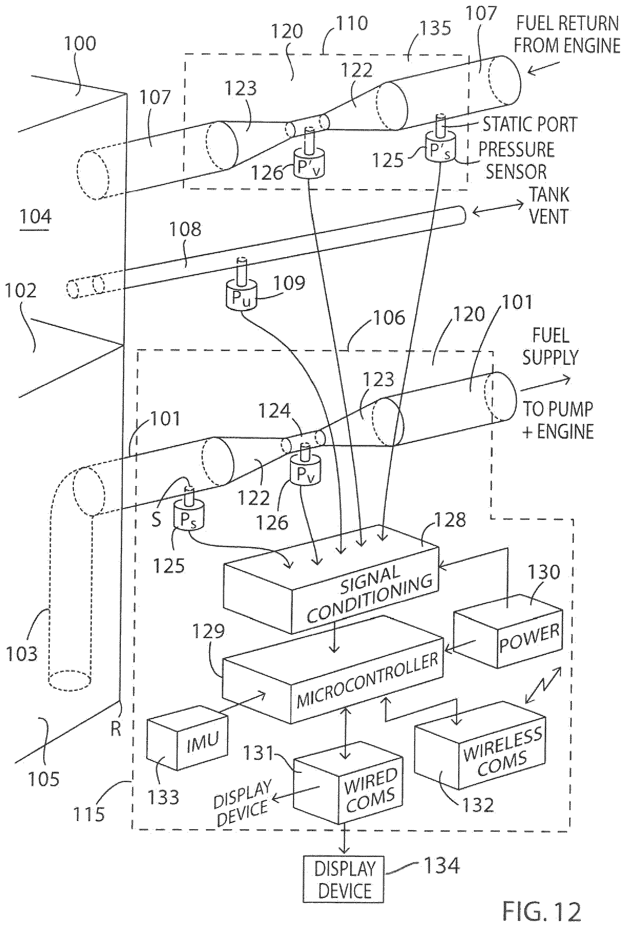

Referring in particular to FIG. 10, the first measurement device 106 comprises a housing or body 115 within which is mounted a venturi 120. The venturi 120 has a fuel passageway 121 with an inlet section 122 (connected to tank 100) and an outlet section 123 (connected to engine) interconnected by a narrowed throat centre section 124. An inlet pressure sensor 125 measures the static pressure at the inlet section 122. A centre section pressure sensor 126 measures the static pressure at the centre section 124. Pressure signals from the pressure sensors 125, 126 and also from the ullage pressure sensor 109 undergo signal conditioning 128 and are communicated to a controller 129 having a microprocessor for making the required calculations. The controller 129 has a power supply 130, a wired interface 131 for connection to an external display device 134 (Fig. 12) and wireless radio 132 for remote communication. An inertial measurement unit 133 is connected to the controller 129. The inertial measurement unit 133 comprises a 3-axis accelerometer and optionally also a 3-axis gyroscope to improve performance of the accelerometer.

Referring in particular to FIG. 11, the second measurement device 110 for mounting in the fuel return line 107 is shown. This is largely similar to the first measurement device 106 shown in FIG. 10 and like parts similar are assigned the same reference numerals. In this case a housing or body 135 contains the venturi 120 which is mounted in the return fuel line 107. The inlet section 122 of the venturi 120 receives fuel returning from the engine and the outlet section 123 is connected to the tank 100.

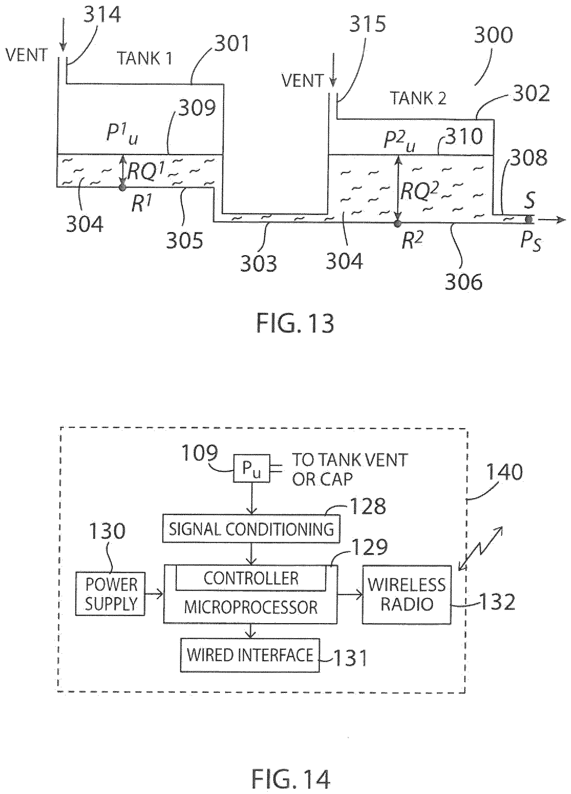

FIG. 12 shows a tank measurement system according to the invention incorporating the measurement devices 106, 110 shown in FIG. 10 and FIG. 11. Instead of being connected into the device 106 as shown in FIG. 12, the ullage pressure sensor 109 may be part of a separate third measurement device 140 as shown in FIG. 14, for mounting on or connected to the vent pipe 108 or cap of the tank 100.

FIG. 10 depicts a cross-section of the fuel-supply Venturi component 120 of the present invention, comprising pressure sensors 125, 126 ($p_s$, $p_v$) that measure the static pressures ($P_1$, $P_2$) at an inlet 122 and at a centre section 124 of the Venturi 120 respectively. The inlet 122 and centre 124 cross-sectional areas are ($A_1$, $A_2$) respectively. The inlet 122 velocity is $u_1$ and the centre velocity is $u_2$. The volume flow rate Q is given by:

$$Q = u_1 . A_1 = u_2 . A_2 \qquad (1)$$

The Bernoulli equation for viscous flow between $p_1$ and $p_2$ can be expressed as:

$$(p_1 - p_2) = \frac{\rho}{2} \cdot (u_2^2 - u_1^2) + \rho \cdot g \cdot (h_2 - h_1) + \rho \cdot g \cdot h_{loss}, \qquad (2)$$

where $h_1$, $h_2$ are the elevations of the pressure sensors 125, 126 above an arbitrary datum and $h_{loss}$ is the irreversible head loss in the Venturi 120 due to friction. Acceleration due to gravity and disturbing forces is represented $g$, and $\rho$ is the density of the liquid.

Substituting Eq. (1) into Eq. (2) provide the volume flow rate:

$$
\begin{aligned}
Q &= A_1 \cdot \sqrt{\frac{2}{\rho} \cdot \frac{(p_1 - p_2) - \rho \cdot g \cdot (h_2 - h_1) - \rho \cdot g \cdot h_{loss}}{(\frac{A_1}{A_2})^2 - 1}}, \\
&= A_2 \cdot \sqrt{\frac{2}{\rho} \cdot \frac{(p_1 - p_2) - \rho \cdot g \cdot (h_2 - h_1) - \rho \cdot g \cdot h_{loss}}{1 - (\frac{A_2}{A_1})^2}}.
\end{aligned}
\qquad (3)
$$

Neglecting the change in elevation between $p_1$ and $p_2$ and considering the head loss $h_{loss}$ as a discharge coefficient Cd, Eq. (3) can be formulated as:

$$
\begin{aligned}
Q &= C_d \cdot A_1 \cdot \sqrt{\frac{2}{\rho} \cdot \frac{(p_1 - p_2)}{(\frac{A_1}{A_2})^2 - 1}}, \\
&= C_d \cdot A_2 \cdot \sqrt{\frac{2}{\rho} \cdot \frac{(p_1 - p_2)}{1 - (\frac{A_2}{A_1})^2}}.
\end{aligned}
\qquad (4)
$$

For a well designed Venturi 120, $C_d$ can be as high as 0.98.

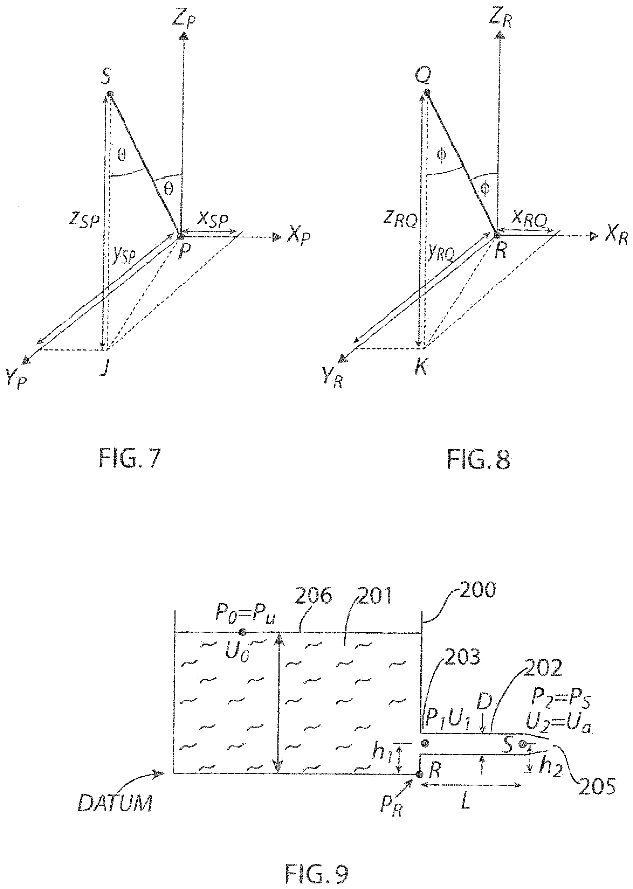

Consider FIG. 9 which depicts a cross-section of a tank system 200 containing liquid 201. As a first approximation, the liquid flow is considered stationary and laminar. Also as the top of the tank 200 is open, it is assumed that the pressure at $p_0$ is equal to the tank ullage pressure $p_u$. The Reynolds number $R_e$ is defined by the measured average velocity $u_a$ = $u_1$ = $u_2$ (as pipe 202 is constant diameter), the diameter D of an inlet section 203 of the Venturi pipe 202 and the kinematic viscosity of the liquid $v$ as:

$$R_e = \frac{u_a \cdot D}{\nu}. \qquad (5)$$

The kinematic viscosity can also be defined by the ratio of the dynamic viscosity $\mu$ and the density of the liquid $\rho$ as:

$$\nu = \frac{\mu}{\rho}. \qquad (6)$$

The volume flow rate can be expressed through the continuity equation as:

$$Q = u_a \cdot A, \qquad (7)$$

where A is the cross-sectional area of the pipe 202 at the inlet section 203 of the Venturi pipe 202, defined as:

$$A = \frac{\pi \cdot D^2}{4}.$$ (8)

Therefore the volume flow rate (Eq. 7) an be written:

$$Q = u_a \cdot \frac{\pi \cdot D^2}{4}.$$ (9)

Thus the average velocity $u_a$ at the inlet section 203 of the Venturi pipe 202 is:

$$u_a = \frac{4 \cdot Q}{\pi \cdot D^2}.$$ (10)

Therefore, the dimensionless Reynolds number (Eq. 5) based on the definition of the average velocity (Eq. 10) can also be expressed through the volume flow rate (Eq. 9) as:

$$R_e = \frac{u_a \cdot D}{\nu} = \frac{4 \cdot Q}{\pi \cdot \nu \cdot D}.$$ (11)

The length L of the pipe 202 between the tank 200 and the Venturi 205 and the relative height $h_2$ of the Venturi inlet S above the chosen datum R is defined by the installation. The static pressure $p_2 = p_s$ is measured by the pressure sensor at the venturi inlet S.

An analytical solution can be given for the change in the height $h_0$ - $h_1$ of the free-surface 206 relative to the sensor S as a function of the dimensionless Reynolds number $R_e$ and the volume flow rate Q. The pressure $p_1$ can be expressed as:

$$p_1 = p_0 + \rho \cdot g \cdot (h_0 - h_1),$$
$$= p_u + \rho \cdot g \cdot (h_0 - h_1).$$ (12)

The Bernoulli equation for viscous flow between $p_1$ and $p_2$ can be expressed in terms of "heads" as:

$$\frac{p_1}{\rho \cdot g} + \frac{u_1^2}{2\dot{g}} + h_1 = \frac{p_2}{\rho \cdot g} + \frac{u_2^2}{2\dot{g}} + h_2 + h_{loss},$$ (13)

where $h_{loss}$ is the irreversible head loss due to all components of the pipe 202 between $p_1$ and $p_2$. The energy loss $e_{loss}$ associated with the head loss (Eq. 13) can be expressed using the Darcy-Weisbach equation:

$$e_{loss} = \lambda \cdot \frac{L}{D} \cdot \frac{u_a^2}{2},$$ (14)

which gives

$$h_{loss} = \frac{e_{loss}}{g} = \lambda \cdot \frac{L}{D} \cdot \frac{u_a^2}{2 \cdot g}, \qquad (15)$$

where $\lambda$ is the dimensionless coefficient of friction which depends on the Reynolds number (Eq. 10) for laminar flow as:

$$\lambda = \frac{64}{R_e} = \frac{64 \cdot \nu}{u_a \cdot D} = \frac{16 \cdot \pi \cdot \nu \cdot D}{Q}. \qquad (16)$$

Therefore the head loss (Eq. 15) can be expressed in terms of average velocity as:

$$h_{loss} = \frac{32 \cdot \nu \cdot L \cdot u_a}{g \cdot D^2}, \qquad (17)$$

or in terms of volume flow rate as:

$$h_{loss} = \frac{128 \cdot \nu \cdot L \cdot Q}{\pi \cdot g \cdot D^4}. \qquad (18)$$

Applying the Bernoulli equation (Eq. 13) to the length of pipe from $p_1$ to $p_2$, we get:

$$\frac{(p_1 - p_2)}{\rho \cdot g} = \frac{\Delta p}{\rho \cdot g} = h_{loss}, \qquad (19)$$

with the pressure drop over the pipe length given by:

$$(p_1 - p_2) = \Delta p = \frac{32 \cdot \rho \cdot \nu \cdot L \cdot u_a}{D^2} = \frac{128 \cdot \rho \cdot \nu \cdot L \cdot Q}{\pi \cdot D^4}. \qquad (20)$$

Combining Eqs. (12) and (19) we can define the height difference from the free-surface to $p_2$ as:

$$(h_0 - h_2) = \frac{(p_2 - p_0)}{\rho \cdot g} + h_{loss}. \qquad (21)$$

Noting that $p_s = p_2$ and $p_u = p_0$, the pressure head SP at the sensor S can be expressed in terms of pressure difference and volume flow rate (Eq. 18) as:

$$SP = (h_0 - h_2) = \frac{(p_s - p_u)}{\rho \cdot g} + \frac{128 \cdot \nu \cdot L \cdot Q}{\pi \cdot g \cdot D^4}. \qquad (22)$$

FIG. 2 depicts an isolated view of the extended free-surface 102 of the liquid 105 when subjected to external accelerations in both pitch and roll. Point P on the free-surface 102 is the location of the normal to the first pressure sensor S (pressure sensor 125) on the measurement device 106. Point Q on the free-surface 102 is the location of the normal to the reference point R on the tank 100.

Knowledge of the local acceleration vector $\bar{a}$ and the location of the first sensor S of the measurement device is required to compute the perpendicular distance QR from point Q on the free-surface to the reference point R. The pressure head experienced at R is obtained from the height of the fuel above the reference R and the magnitude of the local acceleration $\bar{a}$.

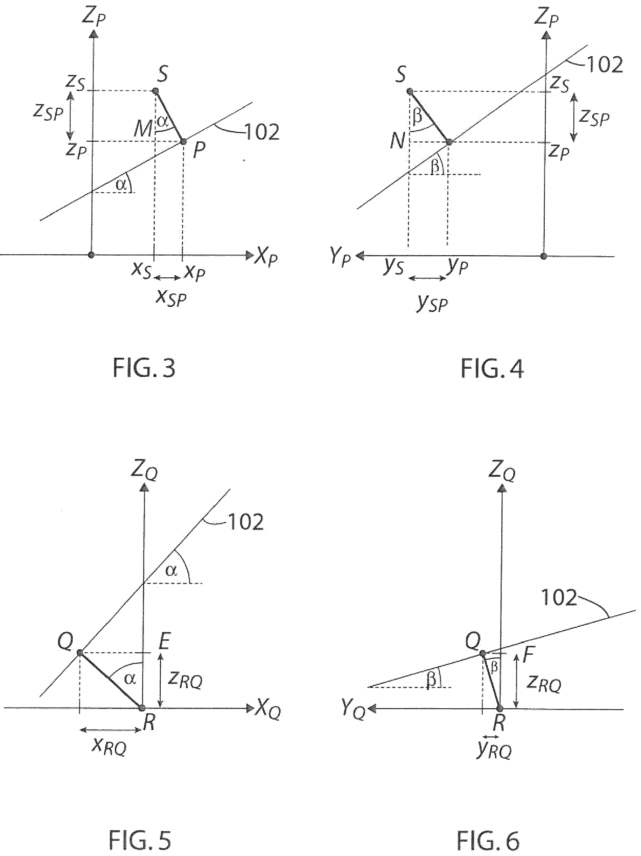

FIG. 3 depicts the projection of the free-surface onto the $\{Z_P, X_P\}$ plane, centred on the point P $(x_p, y_p, z_p)$, which is the normal from the plane to the first sensor S $(x_s, y_s, z_s)$. The distances along each of the $\{Z_P, X_P\}$ axes from S to P are $(z_{sp}, x_{sp})$ respectively. Consider $\triangle$ SMP:

$$x_{sp} = z_{sp} \cdot \tan\alpha. \tag{23}$$

FIG. 4 depicts the projection of the free-surface onto the $\{Z_P, Y_P\}$ plane, also centred on the point P $(x_p, y_p, z_p)$, which is the normal from the plane to the first sensor S $(x_s, y_s, z_s)$. The distances along each of the $\{Z_P, Y_P\}$ axes from S to P are $(z_{sp}, y_{sp})$ respectively. Consider $\triangle$ SNP:

$$y_{sp} = z_{sp} \cdot \tan\beta. \tag{24}$$

FIG. 7 depicts the normal on the free-surface from P $(x_p, y_p, z_p)$ to S $(x_s, y_s, z_s)$. Let $\theta$ be the angle that the normal makes with the $Z_P$ axis. Consider $\triangle$ SPJ:

$$\theta = \tan^{-1}\left(\frac{\sqrt{x_{sp}^2 + y_{sp}^2}}{z_{sp}}\right). \tag{25}$$

Substituting equations (23) and (24) into (25) and define SP as the distance from S to P gives:

$$\theta = \tan^{-1}\sqrt{\tan^2\alpha + \tan^2\beta}, \tag{26}$$

$$z_{sp} = SP \cdot \cos\theta. \tag{27}$$

These equations establish the relationship between S and P via $(x_{sp}, y_{sp}, z_{sp})$. Furthermore, P $(x_p, y_p, z_p)$ is defined in terms of S $(x_s, y_s, z_s)$ as:

$$x_p = x_s + x_{sp},$$

$$y_p = y_s - y_{sp}, \tag{28}$$

$$z_p = z_s - z_{sp}.$$

The normal from S to P is defined as:

$$\hat{n} = \overrightarrow{SP} = \langle (x_s - x_p), (y_s - y_p), (z_s - z_p) \rangle,$$

$$= \langle -x_{sp}, \ y_{sp}, \ z_{sp} \rangle. \tag{29}$$

The equation of the surface plane 102 is therefore given by:

$$-x_{sp}(x-x_p) + y_{sp}(y-y_p) + z_{sp}(z-z_p) = 0,$$

$$\implies (-x_{sp})x + (y_{sp})y + (z_{sp})z - (-x_{sp}x_p + y_{sp}y_p + z_{sp}z_p) = 0. \tag{30}$$

The distance RQ from the reference point R $(x_r, y_r, z_r)$ to the surface plane at point Q is given by:

$$RQ = \frac{\left| (-x_{sp}x_r) + (y_{sp}y_r) + (z_{sp}z_r) - (-x_{sp}x_p + y_{sp}y_p + z_{sp}z_p) \right|}{\sqrt{x_{sp}^2 + y_{sp}^2 + z_{sp}^2}}. \tag{31}$$

RQ is the distance to the free-surface from the reference point R, and when combined with the magnitude of the local acceleration vector $|\bar{a}|$, enables the pressure head at R to be determined.

### Determine Quantity Of Liquid In Tank

The quantity of liquid in the tank 100 is determined from a knowledge of the:

- orientation of the free-surface 102 (a, β) and the magnitude of the acceleration vector,
- pressure head RQ at the tank 100 reference point R,
- mathematical model relating quantity to free-surface 102 orientation and pressure head.

### Orientation of the free-surface and G-loading

The angles associated with the orientation of the free-surface 102 and the magnitude of the G-loading are easily derived from the local acceleration vector computed in the measurement device from accelerometer data. More stable, accurate and responsive acceleration measurements are obtained by using an Inertial Measurement Unit (IMU) which provides accelerometer and gyroscope data that can be integrated using a Kalman filter or equivalent sensor fusion algorithm.

### Pressure head at the tank reference point

This is obtained indirectly by applying an algorithm to measurements of the static pressure at the first sensor S and the tank ullage region 104. The effects of G-loading are applied during the calculation of pressure head via the acceleration parameter g.

### Tank model

As fuel tanks are typically complex geometries, an efficient method of encapsulating the tank geometry is to use a look-up table (LUT) that contains sufficient data points to achieve the desired accuracy.
The LUT is generated using the open-source FreeCAD tool running a python script that successively displaces sections of a solid model of the tank 100 by an air box to simulate the free-surface 102 of the liquid. The tank model is tilted along the pitch and roll axes to emulate the effects of the local acceleration vector, which is always perpendicular to the free-surface 102. In this way, a comprehensive set of data points can be generated that relate free-surface 102 orientation $(\alpha, \beta)$ and pressure head (at a specified tank reference point R) to liquid quantity.
Trilinear interpolation can be used to extract the exact quantity, however by constraining the angles $(\alpha, \beta)$ to 1 degree increments and the pressure head to 1 mm increments, the complexities of trilinear interpolation can be avoided at the expense of increased non-volatile memory to accommodate the larger LUT. Sample pseudo-code illustrating the algorithm is listed in Algorithm 1.

### Sensor Auto-Location

FIG. 5 depicts the projection of the free-surface 102 onto the $\{Z_Q, X_Q\}$ plane, centred on the point Q $(x_Q, y_Q, z_Q)$, which is the normal from the plane to the reference point R $(x_R, y_R, z_R)$. The distances along each of the $\{Z_Q, X_Q\}$ axes from R to Q are $(z_{RQ}, x_{RQ})$ respectively. Consider $\triangle$ QER:

$$x_{RQ} = z_{RQ} \cdot \tan\alpha.$$ (32)

FIG. 6 depicts the projection of the free-surface onto the $\{Z_Q, Y_Q\}$ plane, also centred on the point Q $(x_Q, y_Q, z_Q)$, which is the normal from the plane to the reference point R $(x_R, y_R, z_R)$. The distances along each of the $\{Z_Q, Y_Q\}$ axes from R to Q are $(z_{RQ}, y_{RQ})$ respectively. Consider $\triangle$ QFR:

$$y_{RQ} = z_{RQ} \cdot \tan\beta.$$ (33)

FIG. 8 depicts the normal on the free-surface from Q $(x_Q, y_Q, z_Q)$ to R $(x_R, y_R, z_R)$. Let $\phi$ be the angle that the normal makes with the $z_R$ axis. Consider $\triangle$ QRK:

$$\phi = \tan^{-1}\left(\frac{\sqrt{x_{RQ}^2 + y_{RQ}^2}}{z_{RQ}}\right).$$ (34)

Substituting equations (32) and (33) into equation (34) and defining *RQ* as the *distance* from R to Q gives:

$$\phi = \tan^{-1}\sqrt{\tan^2\alpha + \tan^2\beta},$$ (35)

$$z_{RQ} = RQ \cdot \cos\phi.$$ (36)

These equations establish the relationship between R and Q via $(x_{RQ}, y_{RQ}, z_{RQ})$. Furthermore, Q $(x_Q, y_Q, z_Q)$ is defined in terms of R $(x_R, y_R, z_R)$ as:

$$x_Q = x_R - x_{RQ},$$
$$y_Q = y_R + y_{RQ},$$ (37)
$$z_Q = z_R + z_{RQ}.$$

The normal from R to Q is defined as:

$$\hat{n} = \overrightarrow{RQ} = \langle(x_R - x_Q), (y_R - y_Q), (z_R - z_Q)\rangle,$$
$$= \langle x_{RQ}, -y_{RQ}, -z_{RQ}\rangle.$$ (38)

The equation of the surface plane 102 is therefore given by:

$$x_{RQ}(x - x_Q) - y_{RQ}(y - y_Q) - z_{RQ}(z - z_Q) = 0,$$
$$\implies (x_{RQ})x - (y_{RQ})y - (z_{RQ})z - (x_{RQ}\,x_Q - y_{RQ}\,y_Q - z_{RQ}\,z_Q) = 0.$$ (39)

Equations 30 and 39 relate to the same plane, therefore:

$$(-x_{SP})x + (y_{SP})y + (z_{SP})z - (-x_{SP}\,x_P + y_{SP}\,y_P + z_{SP}\,z_P)$$

$$= (x_{RQ})x - (y_{RQ})y - (z_{RQ})z - (x_{RQ}\,x_Q - y_{RQ}\,y_Q - z_{RQ}\,z_Q)\,.$$

The distance *SP* from the first sensor S $(x_S,y_S,z_S)$ to the surface plane at point *P* is given

$$SP = \frac{|(-x_{RQ})\,x_S + (y_{RQ})\,y_S + (z_{RQ})\,z_S - (-x_{RQ}\,x_Q + y_{RQ}\,y_Q + z_{RQ}\,z_Q)|}{\sqrt{x_{RQ}^2 + y_{RQ}^2 + z_{RQ}^2}}\,.$$

It is possible to compute the location of the sensor S by solving 3 equations (41) in 3 unk $(x_s,y_s,z_s)$, given 3 independent data sets with the following parameters:

| | |
|---|---|
| $\langle x_S,y_S,z_S\rangle$ | location of first sensor S (unknown) |
| $\langle x_R,y_R,z_R\rangle$ | location of reference point R |
| $SP$ | distance of free-surface from first sensor, $|\overrightarrow{SP}|$ |
| $RQ$ | distance of free-surface from reference point, $|\overrightarrow{RQ}|$ |
| $\alpha, \beta$ | pitch & roll angles of free-surface |
| $\theta = \phi = tan^{-1}\sqrt{tan^2\alpha + tan^2\beta}$ | angle $\overrightarrow{SP}$ & $\overrightarrow{RQ}$ deviate from vertical |
| $<x_{RQ}, y_{RQ}, z_{RQ}>$ | $<(z_{RQ}\tan\alpha), (z_{RQ}\tan\beta), (RQ.\cos\theta)>$ |
| $\langle x_Q, y_Q, z_Q\rangle$ | $\langle(x_R\text{-}x_{RQ}), (y_R\text{-}y_{RQ}), (z_R\text{-}z_{RQ})\rangle$ |

Assuming 3 versions (i=1,2,3) of equation (41) can be generated for fixed locations of the reference point R and first sensor S, the corresponding matrix representation is:

$$\underbrace{\begin{bmatrix} -x_{RQ}^1 & y_{RQ}^1 & z_{RQ}^1 \\ -x_{RQ}^2 & y_{RQ}^2 & z_{RQ}^2 \\ -x_{RQ}^3 & y_{RQ}^3 & z_{RQ}^3 \end{bmatrix}}_{A} \cdot \underbrace{\begin{bmatrix} x_S \\ y_S \\ z_S \end{bmatrix}}_{x} = \underbrace{\begin{bmatrix} d^1 \\ d^2 \\ d^3 \end{bmatrix}}_{b}, \qquad (42)$$

where:

$$d^i = (-x_{RQ}^i\,x_Q^i) + (y_{RQ}^i\,y_Q^i) + (z_{RQ}^i\,z_Q^i) \pm SP^i\sqrt{(x_{RQ}^i)^2 + (y_{RQ}^i)^2 + (z_{RQ}^i)^2}\,. \qquad (43)$$

Solving the linear system (42) gives the location of the first sensor S $(x_s,y_s,z_s)$:

$$\mathbf{x} = \mathbf{A}^{-1} \cdot \mathbf{b}\,. \qquad (44)$$

Note that equation (43) implies that there are two possible solutions for each $d^i$ and the correct one will be evident by inspection of the resulting location for S. in practice, multiple solutions for S can be computed for different orientations and levels of the free-surface as the tank drains during flight. Statistical analysis of this set of location data enables the most accurate location for S to be determined.

The pressure head RP at the tank reference point R is obtained by applying an inverse-interpolation algorithm on the tank model, with inputs a, $\beta$ and quantity $\psi$. The tank quantity is obtained with knowledge of an initial quantity and then computing the quantity consumed at subsequent times by integrating the volume flow-rate over a known elapsed time period.

By constraining the angles (a, $\beta$) to 1 degree increments it is possible to avoid the complexities of inverse-trilinear interpolation whilst re-using the same lookup table (LUT) as required for determining *Quantity.* Sample pseudo-code is listed in Algorithm 2.

**Pressure Heads In Multiple Interconnected Tanks**

Consider FIG. 13 which depicts a cross-section of an interconnected dual-tank system 300 comprising first tank 301 and second tank 302 interconnected by pipe 303 extending between the bottom of the tanks 301, 302 and containing liquid 304. The tanks 301, 302 have tank bases 305, 306 respectively which are at different heights and each tank 301, 302 is vented separately with ullage pressures $p_u^1$ and $p_u^2$. Liquid may be extracted from the lower tank 302 through outlet 308 under gravity or by a mechanical pump.

To minimise the effects of local accelerations on the fuel surfaces 309, 310 choose the reference points, $R^1$ and $R^2$ for each tank 301, 302 to be at the centre of each tank base 305, 306. With knowledge of the pressure head SP at the first sensor S and the ullage pressures in each tank 301, 302, the pressure heads $RQ^1$ and $RQ^2$ at these reference points $R^1$, $R^2$ can be computed using the methods described previously for a single tank 301, 302 using Eq. (31). The quantity of liquid in each tank 301, 302 is extracted from mathematical models that are specific to each tank 301, 302 using Algorithm 1.

An ullage pressure sensor 109 and a mathematical model of each tank 301, 302 are required to determine the quantity of liquid in interconnected tanks 301, 302. No additional installation work is required if the vent lines 314, 315 are linked to equalise the ullage pressures. The quantity of liquid in each tank 301, 302 is computed by simply changing the location of the reference point from $R^1$ to $R^2$ in Eq. (31) and Algorithm 1, and also selecting the corresponding ullage pressure measurement.

Single tanks are typically subdivided into sections, separated by internal slosh baffles. These can be considered as a group of interconnected tank sections where the individual pressure heads $RQ^i$ for each section can be computed separately. To minimise variations in the free-surface orientation in each section, the individual $X_R^i$ and $Y_R^i$ reference point values are specified to be the projection of the centroid of each section volume on the tank base. The quantity of liquid in each tank section is extracted from a mathematical model of each section and the associated pressure head $RQ^i$. The total quantity of liquid in the tank is a summation of the individual quantities in each tank section. This approach assumes that the ullage pressure is constant for all sections but permits a more accurate quantity measurement when the liquid in each section has not yet reached its equilibrium level. Memory resources for the tank section lookup tables are minimised when multiple tank sections are identical.

The above examples illustrate the simplicity and flexibility of external pressure sensing in complex tank installations.

**Monitoring Liquid Pump Operation**

By sampling static pressures, at typical rates of 10ms, a Fast Fourier Transform (FFT) of the captured signal allows the operational frequencies of the fuel pump(s) to be determined. From this data, it is possible to accurately determine (a) whether the electrical and mechanical pumps are operating, (b) changes that predict impending failure modes, and (c) the speed of the engine that drives the mechanical pump.

Continuous logging and analysis of this data is an independent mechanism for monitoring changes in engine/pump health and alerting the pilot in a timely manner, thereby promoting flight safety.

Algorithm 1 depicts pseudo-code for extracting liquid quantity from a LUT, simplified by imposing constraints on surface orientation and pressure head inputs.

Algorithm 2 depicts pseudo-code for extracting pressure head at the tank reference point from a LUT, simplified by imposing constraints on surface orientation inputs.

Algorithm 3 depicts the steps carried out during "fuel system health monitoring". Fuel quantity is periodically derived from two independent sources: (a) volume flow-rate is integrated over time and subtracted from a known initial quantity, and (b) pressure head at the reference point and free-surface orientation enable fuel quantity to be extracted from a tank model. Flight safety is enhanced as the pilot is alerted to any inconsistencies in these two values.

Algorithm 4 depicts the steps carried out to accurately locate the first pressure sensor in relation to the tank reference point.

**ALGORITHMS**

---

**Algorithm 1** Extract Quantity from LUT

---

**Require:** Range check and limiting on all input values

**Require:** LUT organised as (N×4) matrix with each row comprising: $\alpha$, $\beta$, $RQ$ & $\Psi$

1: **function** GETQUANTITY($\alpha$, $\beta$, $RQ$)         ▷ Pitch, roll & pressure head at **R** respectively

2:    $\Psi \leftarrow -1$         ▷ Initialise quantity to detect lookup error

3:    **for** $i \leftarrow 1, N$ **do**         ▷ For all rows in lookup table

4:        **if** $LUT[i][0] = \alpha$ **then**         ▷ $\alpha$ value detected

5:            **if** $LUT[i][1] = \beta$ **then**         ▷ $\beta$ value detected

6:               **if** $LUT[i][2] = RQ$ **then**         ▷ $RQ$ value detected

7:                   $\Psi \leftarrow LUT[i][3]$         ▷ Extract fuel quantity

8:               **end if**

9:            **end if**

10:        **end if**

11:    **end for**

        **return** $\Psi$         ▷ Return quantity

12: **end function**

---

---

**Algorithm 2** Extract $RQ$ from LUT

---

**Require:** Range check and limiting on all input values

**Require:** LUT organised as $(N \times 4)$ matrix with each row comprising: $\alpha$, $\beta$, $RQ$ & $\Psi$

**Require:** Min and Max values for $\alpha$, $\beta$ and $\Psi$ in LUT

```
1:  function GETPRESSHEADATR(α, β, Ψ)                        ▷ Pitch, roll & quantity respectively
2:      Ψ₁ ← Ψ_max                                          ▷ Assign maximum value to upper quantity
3:      Ψ₀ ← Ψ_min                                          ▷ Assign minimum value to lower quantity
4:      i1 ← 0                                              ▷ Reset upper index
5:      i0 ← 0                                              ▷ Reset lower index
6:      RQ ← −1                               ▷ Initialise pressure head to detect lookup error
7:      for i ← 1, N do                                     ▷ For all rows in lookup table
8:          if LUT[i][0] = α then                           ▷ α value detected
9:              if LUT[i][1] = β then                       ▷ β value detected
10:                 if LUT[i][4] ≥ Ψ then                   ▷ Upper Ψ value detected
11:                     if LUT[i][4] < q1 then              ▷ Check & assign lower value
12:                         Ψ₁ ← LUT[i][4]                  ▷ Assign lower quantity
13:                         i1 ← i                          ▷ Assign upper index
14:                     end if
15:                 end if
16:                 if LUT[i][4] ≤ Ψ then                   ▷ Lower Ψ value detected
17:                     if LUT[i][4] > q0 then              ▷ Check & assign higher value
18:                         Ψ₀ ← LUT[i][4]                  ▷ Assign upper quantity
19:                         i0 ← i                          ▷ Assign lower index
20:                     end if
21:                 end if
22:             end if
23:         end if
24:     end for
```

25: $RQ \leftarrow LUT[i0][3] + (\ LUT[i1][3] - LUT[i0][3]\ ) \times \left( \dfrac{\Psi - \Psi_0}{\Psi_1 - \Psi_0} \right)$   ▷ Linear interpolation

       **return** $RQ$   ▷ Return pressure head at reference point R

26: **end function**

---

---

**Algorithm 3** Fuel Tank Health Monitoring

---

**Require:** Tank model (LUT) relating free-surface orientation & pressure head to quantity

1: $\{D_1, D_2\} \leftarrow values$ ▷ Assign Venturi inlet & center diameters respectively

2: $\{L\} \leftarrow values$ ▷ Assign combined pickup & outlet pipe length

3: $\{\rho, \nu\} \leftarrow values$ ▷ Assign liquid properties (density, kinematic viscosity)

4: $\{x_{sr}, y_{sr}, z_{sr}\} \leftarrow values$ ▷ Assign location of first pressure sensor relative to reference point

5: $Q_{min}, \Delta\Psi \leftarrow values$ ▷ Assign tolerances on flow-rate & quantity respectively

6: $mode \leftarrow health\text{-}monitor$ ▷ Enable fuel system heath monitoring

7: **repeat**

8: $\quad \{p_s, p_v, p_u, t_s, t_v, t_u\} \leftarrow values$ ▷ Capture static pressures & temperatures

9: $\quad \{p_{sc}, p_{vc}, p_{uc}\} = \text{APPLYTEMPCOMP}(p_s, p_v, p_u, t_s, t_v, t_u)$ ▷ Apply temperature compensation

10: $\quad \{x_a, y_a, z_a\} \leftarrow values$ ▷ Capture local acceleration from IMU

11: $\quad \{x_g, y_g, z_g\} \leftarrow values$ ▷ Capture local angular rates from IMU

12: $\quad \{\alpha, \beta, |\overline{a}|\} = \text{GETANGLES}(x_a, y_a, z_a, x_g, y_g, z_g)$ ▷ Compute surface angles & G-loading

13: $\quad Q = \text{GETFLOWRATE}(p_{sc}, p_{vc}, D_1, D_2, \rho)$ ▷ Compute volume flow-rate

14: $\quad$ **if** $(Q < Q_{min})$ **then** ▷ Flow not used as below $Q_{min}$

15: $\quad\quad$ go to 27 ▷ Read parameters & compute volume flow-rate again

16: $\quad$ **else if** $(Q_{t-1} < Q_{min})$ *and* $(Q_t \geq Q_{min})$ **then** ▷ Flow just started

17: $\quad\quad \Psi_{NVM} \leftarrow \Psi$ ▷ Store initial quantity in non-volatile memory

18: $\quad$ **end if**

19: $\quad SP = \text{GETPRESSHEADATS}(\alpha, \beta, p_{sc}, p_{uc}, D_1, L, \rho, \nu)$ ▷ Compute pressure head at S

20: $\quad RQ = \text{TRANSLATESTOR}(\alpha, \beta, SP, x_{sr}, y_{sr}, z_{sr})$ ▷ Translate pressure head at S to R

21: $\quad \Psi = \text{GETQUANTITY}(\alpha, \beta, RQ)$ ▷ Compute quantity from tank model

22: $\quad \Psi_r = \text{GETQUANTITYREMAINING}(Q, \Psi_{NVM})$ ▷ Integrate flow-rate over known time period

23: $\quad$ **if** $(\Psi_r < \Psi - \Delta\Psi)$ *or* $(\Psi_r > \Psi + \Delta\Psi)$ **then** ▷ Quantities differ by more than $\Delta\Psi$

24: $\quad\quad \text{PUSHMESSAGE}(\text{"}alert\text{"})$ ▷ Alert pilot that issue with fuel system health

25: $\quad$ **end if**

26: $\quad \text{PUSHUPDATES}(\Psi, \Psi_r, Q)$ ▷ Update connected devices with current data

27: $\quad \text{DELAY}(time\text{-}period)$ ▷ Repeat above steps after waiting for preset time

28: **until** $(mode \neq health\text{-}monitor)$ ▷ Repeat until mode changes

---

---

**Algorithm 4 Sensor Auto-Locate**

**Require:** Tank model (LUT) relating free-surface orientation & pressure head to quantity

1: $\{D_1, D_2\} \leftarrow values$     ▷ Assign Venturi inlet & center diameters respectively

2: $\{L\} \leftarrow values$     ▷ Assign combined pickup & outlet pipe length

3: $\{\rho, \nu\} \leftarrow values$     ▷ Assign liquid properties (density, kinematic viscosity)

4: $Q_{min}, \Delta\Psi \leftarrow values$     ▷ Assign tolerances on flow-rate & quantity respectively

5: $iteration \leftarrow 0$     ▷ Reset auto-locate iteration counter

6: $\Delta S \leftarrow values$     ▷ Assign tolerances on sensor location

7: $mode \leftarrow auto\text{-}locate$     ▷ Enable sensor auto-location

8: **repeat**

9:     $iteration \leftarrow iteration + 1$     ▷ Increment iteration counter

10:     $\{p_s, p_v, p_u, t_s, t_v, t_u\} \leftarrow values$     ▷ Capture static pressures & temperatures

11:     $\{p_{sc}, p_{vc}, p_{uc}\} = \text{APPLYTEMPCOMP}(p_s, p_v, p_u, t_s, t_v, t_u)$     ▷ Apply temperature compensation

12:     $\{x_a, y_a, z_a\} \leftarrow values$     ▷ Capture local acceleration from IMU

13:     $\{x_g, y_g, z_g\} \leftarrow values$     ▷ Capture local angular rates from IMU

14:     $\{\alpha, \beta, |\vec{a}|\} = \text{GETANGLES}(x_a, y_a, z_a, x_g, y_g, z_g)$     ▷ Compute surface angles & G-loading

15:     $Q = \text{GETFLOWRATE}(p_{sc}, p_{vc}, D_1, D_2, \rho)$     ▷ Compute volume flow-rate

16:     $\Psi_r = \text{GETQUANTITYREMAINING}(Q, \Psi_{NVM})$     ▷ Integrate flow-rate over known time period

17:     $SP = \text{GETPRESSHEADATS}(p_{sc}, p_{uc}, D_1, L, \rho, \nu, \alpha, \beta)$     ▷ Compute pressure head at S

18:     $RQ = \text{GETPRESSHEADATR}(\alpha, \beta, \Psi_r)$     ▷ Extract pressure head at R from tank model

19:     $\{x_s, y_s, z_s\} = \text{GETSENSORPOSR}(\alpha, \beta, SP, RQ, \Delta S)$     ▷ Compute location of S relative to R

20:     **if** $(x_s \neq 0)$ *and* $(y_s \neq 0)$ *and* $(z_s \neq 0)$ **then**     ▷ Non-zero values imply valid location

21:         $\text{PUSHMESSAGE}("success", iteration)$     ▷ Update connected devices with current status

22:         $mode \leftarrow health\text{-}monitor$     ▷ Restore fuel system heath monitoring

23:     **else**     ▷ Keep iterating as sensor location not computed to required accuracy

24:         $\text{PUSHMESSAGE}("calibrating", iteration)$     ▷ Update connected devices with current status

25:         $\text{DELAY}(time\text{-}period)$     ▷ Repeat above steps after waiting for preset time

26:     **end if**

27: **until** $(mode \neq auto\text{-}locate)$     ▷ Repeat until mode changes

---

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A measurement device (106) for determining the quantity of liquid (105) in a tank (100), including:

    a first pressure sensor (125) to measure a first pressure value for liquid in the tank (100),
    a second pressure sensor (109) for measuring a second pressure value in an ullage space (104) above the liquid (105) in the tank (100),
    an accelerometer (133),

**characterised in that** the first pressure sensor (125) is for mounting on a liquid outlet pipe (101) connected to the tank (100) for discharging liquid from the tank (100), and

the measurement device (106) includes a flow measurement device (120) to determine the rate of liquid flow through the liquid outlet pipe (101), and

means for calculating the quantity of liquid in the tank (100) in response to the measured values from the pressure sensors (109, 125), accelerometer (133) and flow measurement device (120).

2. The device (106) as claimed in claim 1, wherein the calculating means is operable to determine the pressure at a selected reference point (R) associated with the tank (100) based on the first pressure value.

3. The device (106) as claimed in claim 2, wherein the selected reference point (R) is at a bottom of the tank (100).

4. The device (106) as claimed in any one of the preceding claims, wherein the flow measurement device (120) is a differential pressure meter.

5. The device (106) as claimed in claim 4 wherein the differential pressure meter comprises a venturi flow meter (120).

6. The device (106) as claimed in any preceding claim wherein the device comprises a body (115) having a liquid passageway (121) extending through the body (115) between an inlet port (122) and an outlet port (123), the first pressure sensor (125) being mounted at the liquid passageway (121) adjacent the inlet port (122).

7. The device (106) as claimed in claim 6, wherein the venturi flow meter (120) is provided in the liquid passageway (121).

8. The device as claimed in claim 6 or claim 7, wherein at least one 3-axis accelerometer is mounted on the body.

9. The device as claimed in any one of claims 6 to 8 wherein at least one 3-axis gyroscope is mounted on the body.

10. The device as claimed in any preceding claim, wherein the second pressure sensor is mounted at a vent pipe on the tank.

11. The device as claimed in any one of claims 1 to 9 wherein the second pressure sensor is mounted at a fuel cap on the tank.

12. The device as claimed in any one of the preceding claims, wherein at one or more pressure sensing locations a plurality of pressure sensors are provided.

13. The device as claimed in any one of claims 7 to 12, wherein a plurality of pressure sensors are mounted on the body to measure static pressure at an inlet of the venturi and at a throat of the venturi.

14. The device as claimed in any one of claims 7 to 13 wherein a plurality of pressure sensors are mounted on a vent pipe or cap on the tank to provide the second pressure value.

15. The device as claimed in any preceding claim, wherein a second flow measurement device is provided for mounting on a liquid return line connected to the tank.

16. The device as claimed in claim 15 wherein the second flow measurement device is a differential pressure meter.

17. The device as claimed in claim 16 wherein the differential pressure meter is a venturi flow meter.

**Patentansprüche**

1. Messvorrichtung (106) zum Bestimmen der Flüssigkeitsmenge (105) in einem Tank (100), die Folgendes beinhaltet:

einen ersten Drucksensor (125), um einen ersten Druckwert für Flüssigkeit in dem Tank (100) zu messen,
einen zweiten Drucksensor (109) zum Messen eines zweiten Druckwerts in einem Leerraum (104) über der Flüssigkeit (105) in dem Tank (100),
einen Beschleunigungsmesser (133),

**dadurch gekennzeichnet, dass** der erste Drucksensor (125) zum Montieren an einem Flüssigkeitsauslassrohr (101) dient, das mit dem Tank (100) zum Ablassen von Flüssigkeit aus dem Tank (100) verbunden ist, und die Messvorrichtung (106) eine Durchflussmessvorrichtung (120) beinhaltet, um die Durchflussrate der Flüssigkeit durch das Flüssigkeitsauslassrohr (101) zu bestimmen, und Mittel zum Berechnen der Flüssigkeitsmenge in dem Tank (100) als Reaktion auf die gemessenen Werte von den Drucksensoren (109, 125), dem Beschleunigungsmesser (133) und der Durchflussmessvorrichtung (120).

2. Vorrichtung (106) nach Anspruch 1, wobei das Berechnungsmittel betriebsfähig ist, um den Druck an einem ausgewählten Referenzpunkt (R), der dem Tank (100) zugeordnet ist, basierend auf dem ersten Druckwert zu bestimmen.

3. Vorrichtung (106) nach Anspruch 2, wobei sich der ausgewählte Referenzpunkt (R) an einem Boden des Tanks (100) befindet.

4. Vorrichtung (106) nach einem der vorhergehenden Ansprüche, wobei die Durchflussmessvorrichtung (120) ein Differenzdruckmesser ist.

5. Vorrichtung (106) nach Anspruch 4, wobei der Differenzdruckmesser einen Venturi-Durchflussmesser (120) umfasst.

6. Vorrichtung (106) nach einem der vorhergehenden Ansprüche, wobei die Vorrichtung einen Körper (115) umfasst, der einen Flüssigkeitsdurchgang (121) aufweist, der sich durch den Körper (115) zwischen einer Einlassöffnung (122) und einer Auslassöffnung (123) erstreckt, wobei der erste Drucksensor (125) an dem Flüssigkeitsdurchgang (121) angrenzend an die Einlassöffnung (122) montiert ist.

7. Vorrichtung (106) nach Anspruch 6, wobei der Venturi-Durchflussmesser (120) in dem Flüssigkeitsdurchgang (121) bereitgestellt ist.

8. Vorrichtung nach Anspruch 6 oder 7, wobei wenigstens ein 3-Achsen-Beschleunigungsmesser an dem Körper montiert ist.

9. Vorrichtung nach einem der Ansprüche 6 bis 8, wobei wenigstens ein 3-Achsen-Gyroskop an dem Körper montiert ist.

10. Vorrichtung nach einem der vorhergehenden Ansprüche, wobei der zweite Drucksensor an einem Entlüftungsrohr an dem Tank montiert ist.

11. Vorrichtung nach einem der Ansprüche 1 bis 9, wobei der zweite Drucksensor an einem Kraftstoffdeckel an dem Tank montiert ist.

12. Vorrichtung nach einem der vorhergehenden Ansprüche, wobei an einem oder mehreren Druckerfassungsstellen mehrere Drucksensoren bereitgestellt sind.

13. Vorrichtung nach einem der Ansprüche 7 bis 12, wobei mehrere Drucksensoren an dem Körper montiert sind, um einen statischen Druck an einem Einlass des Venturi-Rohrs und an einem Hals des Venturi-Rohrs zu messen.

14. Vorrichtung nach einem der Ansprüche 7 bis 13, wobei mehrere Drucksensoren an einem Entlüftungsrohr oder einer -kappe an dem Tank montiert sind, um den zweiten Druckwert bereitzustellen.

15. Vorrichtung nach einem der vorhergehenden Ansprüche, wobei eine zweite Durchflussmessvorrichtung zum Montieren an einer Flüssigkeitsrücklaufleitung bereitgestellt ist, die mit dem Tank verbunden ist.

16. Vorrichtung nach Anspruch 15, wobei die zweite Durchflussmessvorrichtung ein Differenzdruckmesser ist.

17. Vorrichtung nach Anspruch 16, wobei der Differenzdruckmesser ein Venturi-Durchflussmesser ist.

**Revendications**

1. Dispositif de mesure (106) pour déterminer la quantité de liquide (105) dans un réservoir (100), comportant :

un premier capteur de pression (125) pour mesurer une première valeur de pression pour du liquide dans le réservoir (100),

un second capteur de pression (109) pour mesurer une seconde valeur de pression dans un espace vide (104) au-dessus du liquide (105) dans le réservoir (100),

un accéléromètre (133),

**caractérisé en ce que** le premier capteur de pression (125) est destiné à être monté sur un tuyau de sortie de liquide (101) relié au réservoir (100) pour décharger du liquide du réservoir (100), et

le dispositif de mesure (106) comporte un dispositif de mesure de débit (120) pour déterminer le débit de liquide à travers le tuyau de sortie de liquide (101), et

un moyen pour calculer la quantité de liquide dans le réservoir (100) en réponse aux valeurs mesurées provenant des capteurs de pression (109, 125), de l'accéléromètre (133) et du dispositif de mesure de débit (120).

2. Dispositif (106) selon la revendication 1, dans lequel le moyen de calcul peut fonctionner pour déterminer la pression en un point de référence sélectionné (R) associé au réservoir (100) sur la base de la première valeur de pression.

3. Dispositif (106) selon la revendication 2, dans lequel le point de référence sélectionné (R) est au fond du réservoir (100).

4. Dispositif (106) selon l'une quelconque des revendications précédentes, dans lequel le dispositif de mesure de débit (120) est un pressiomètre différentiel.

5. Dispositif (106) selon la revendication 4, dans lequel le pressiomètre différentiel comprend un débitmètre à venturi (120).

6. Dispositif (106) selon l'une quelconque des revendications précédentes, dans lequel le dispositif comprend un corps (115) ayant un passage de liquide (121) s'étendant à travers le corps (115) entre un orifice d'entrée (122) et un orifice de sortie (123), le premier capteur de pression (125) étant monté au niveau du passage de liquide (121) adjacent à l'orifice d'entrée (122).

7. Dispositif (106) selon la revendication 6, dans lequel le débitmètre à venturi (120) est fourni dans le passage de liquide (121).

8. Dispositif selon la revendication 6 ou la revendication 7, dans lequel au moins un accéléromètre à 3 axes est monté sur le corps.

9. Dispositif selon l'une quelconque des revendications 6 à 8, dans lequel au moins un gyroscope à 3 axes est monté sur le corps.

10. Dispositif selon l'une quelconque des revendications précédentes, dans lequel le second capteur de pression est monté au niveau d'un tuyau d'évent sur le réservoir.

11. Dispositif selon l'une quelconque des revendications 1 à 9, dans lequel le second capteur de pression est monté au niveau d'un bouchon de carburant sur le réservoir.

12. Dispositif selon l'une quelconque des revendications précédentes, dans lequel, à un ou plusieurs emplacements de détection de pression, une pluralité de capteurs de pression sont fournis.

13. Dispositif selon l'une quelconque des revendications 7 à 12, dans lequel une pluralité de capteurs de pression sont montés sur le corps pour mesurer la pression statique à une entrée du venturi et au niveau d'un col du venturi.

14. Dispositif selon l'une quelconque des revendications 7 à 13, dans lequel une pluralité de capteurs de pression sont montés sur un tuyau d'évent ou un bouchon sur le réservoir pour fournir la seconde valeur de pression.

15. Dispositif selon l'une quelconque des revendications précédentes, dans lequel un second dispositif de mesure de débit est fourni pour être monté sur une conduite de retour de liquide reliée au réservoir.

16. Dispositif selon la revendication 15, dans lequel le second dispositif de mesure de débit est un pressiomètre différentiel.

**17.** Dispositif selon la revendication 16, dans lequel le pressiomètre différentiel est un débitmètre à venturi.

FIG. 1

FIG. 2

FIG. 3

FIG. 4

FIG. 5

FIG. 6

24

FIG.7

FIG.8

FIG.9

FIG. 10

FIG. 11

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6513376 B
- US 6577960 B1
- CN 202522286U
- GB 2527269 A1
- EP 3392625 A1
- US 7251998 B2
- WO 2006127540 A2
- US 20060266111 A1
- US 6282953 B1
- US 6157894 A
- US 5386736 A
- US 5138559 A
- US 4739494 A
- US 4553216 A
- US 5207099 A
- FR 2672389 A1
- FR 2596150 A1
- GB 276373 A